# NEUE EUROPÄISCHE PATENTSCHRIFT

(11) **EP 2 362 724 B2**
(45) Veröffentlichungstag und Bekanntmachung des Hinweises auf die Entscheidung über den Einspruch: **24.05.2017**
(45) Hinweis auf die Patenterteilung: 30.04.2014
(21) Anmeldenummer: 09745064.7
(22) Anmeldetag: 04.11.2009
(51) Int. Cl.: A01J 7/02

(54) **REINIGUNGSEINHEIT ZUM REINIGEN WENIGSTENS EINES KOPFABSCHNITTES EINES MELKBECHERS**
CLEANING UNIT FOR CLEANING AT LEAST ONE HEAD SECTION OF A TEAT CUP
UNITÉ DE NETTOYAGE POUR NETTOYER AU MOINS UNE SECTION DE TÊTE D'UN GOBELET TRAYEUR

(30) Priorität: 10.11.2008 DE 102008056545
(43) Veröffentlichungstag der Anmeldung: 07.09.2011
(73) Patentinhaber: GEA Farm Technologies GmbH, 59199 Bönen (DE)
(72) Erfinder: THEIS, Christelle, 58640 Iserlohn (DE); SCHÜRMANN, Bendikt, 48301 Nottuln (DE)
(74) Vertreter: Neumann, Ditmar
(86) Internationale Anmeldenummer: PCT/EP2009/064637
(87) Internationale Veröffentlichungsnummer: WO 2010/052250

(56) Entgegenhaltungen:
- EP-A1- 0 535 754
- EP-A2- 0 990 387
- AU-B2- 564 242
- DD-A1- 38 942
- DE-A1- 4 432 754
- US-A- 4 516 592
- US-B1- 6 418 877

## Beschreibung

Der Gegenstand der Erfindung bezieht sich auf eine Reinigungseinheit zum Reinigen wenigstens eines Kopfabschnittes eines Melkbechers.

Rohmilch stellt ein bedeutsames Lebensmittel dar und ist ein wichtiger Rohstoff für die Nahrungsmittelindustrie. Zum Schutz des Verbrauchers und zur technischen Verarbeitungsfähigkeit ist es notwendig, dass die Milch sowohl nationalen als auch internationalen Qualitätsanforderungen entspricht. In der Bundesrepublik Deutschland darf Rohmilch gemäß § 3 der Milchverordnung keine abnormalen sensorischen Merkmale aufweisen, so dass gemäß Anlage 3 der Milchverordnung das Euter von Tieren, von denen Milch als Lebensmittel gewonnen wird, zu Beginn eines Melkvorgangs gereinigt werden muss. Hierbei ist es erforderlich, dass eine gründliche und vollständige Reinigung erfolgt.

Bedeutsam ist die Einhaltung vorgeschriebener hygienischer Standards, um eine hohe Milchqualität sicherzustellen. Es ist daher nicht nur notwendig, das Euter und die Zitzen des Tieres sondern auch die Komponenten einer Melkanlage zu reinigen. Die Reinigung kann auch eine Desinfektion der Komponenten der Melkanlage mit umfassen. Der Reinigungsvorgang kann mittels eines Fluids, insbesondere mittels Wasser, mit und ohne reinigenden, desinfizierenden oder sonstgen Zusätzen durchgeführt werden. Insbesondere ist es notwendig, das Melkzeug von Milchresten zu reinigen und zu desinfizieren. Es ist nicht zwingend, dass eine Desinfektion des Melkzeugs bei einem jeden Reinigungsvorgang erfolgt.

Der Reinigungsvorgang kann nach jedem Melkvorgang oder nach einer bestimmten Anzahl von Melkvorgängen erfolgen.

Es ist bekannt, dass nach dem Melken einer jeden Kuh das Melkzeug mittels Wasser, einer Desinfektionslösung und wiederum Wasser in Verbindung mit Druckluft gereinigt wird. Hierbei handelt es sich um eine sogenannte Zwischendesinfektion.

Es ist nicht nur notwendig, dass die milchführenden Teile der Melkanlage, insbesondere eines Melkzeugs, gereinigt werden. Zur Sicherstellung der Qualität der Milch ist es ggf. auch notwendig, die Außenfläche der Melkbecher, insbesondere des Kopfabschnittes der Melkbecher zu reinigen. Der Kopfabschnitt umfasst einen Bereich, der Teile eines Zitzengummis aufweist. Die Reinigung des außen liegenden Teils des Zitzengummis, insbesondere des Bereichs des Zitzengummis, der eine Melkbecherhülse überspannt, ist insbesondere dann zweckmäßig, wenn das Zitzengummi oder allgemein gesprochen der Zitzenformschlauch aus Silikon besteht. Das Zitzengummi kann aus Gummi oder anderen Werkstoffen gebildet werden. Bei Zitzensilikon ist es notwendig, aufgrund der größeren Fettaufnahme von Silikon auch den Außenbereich des Zitzensilikonkopfes zu reinigen.

Zum Reinigen von Melkbechern sind unterschiedliche Ausführungsformen einer Reinigungseinheit bekannt. Durch die WO 96/08137 ist eine Reinigungseinheit zum Reinigen wenigstens.. eines Kopfabschnittes eines Melkbecher umfassend eine im Querschnitt im Wesentlichen kreisförmige Kammer bekannt. Die Kammer ist durch eine doppelwandige Wand begrenzt. Die Kammer weist eine Öffnung auf, welche durch ein Dichtelement begrenzt ist. Benachbart zum Dichtelement sind Austrittsöffnungen vorgesehen, durch die eine in der doppelwandigen Wand geführte Flüssigkeit in die Kammer einströmen kann. Die Flüssigkeit strömt entlang der Außenfläche des Kopfabschnittes in den Melkbecher hinein, wodurch eine Reinigung des Kopfabschnittes und des Innenteils des Melkbechers sowie der an den Melkbecher angeschlossenen Teile erfolgt.

Problematisch bei einer solchen Ausgestaltung der Reinigungseinheit ist, dass das Einbringen des Kopfabschnittes des Melkbechers in die Kammer mit einem erheblichen Kraftaufwand verbunden ist. Dies begründet sich damit, dass das Dichtelement eine fluiddichte Verbindung zwischen den Dichtelement und dem Kopfabschnitt sicherstellen muss, um Vakuumverluste zu vermeiden.

Durch die Druckschrift DD 38 942 ist eine Reinigungseinheit zum Reinigung wenigstens eines Kopfabschnittes eines Melkbechers bekannt. Die Reinigungseinheit weist eine Kammer auf, die durch eine Wand begrenzt ist. Die Form der Kammer ist im Wesentlichen kalottenförmig. Eine Abdichtung zwischen der Wand der Kammer und dem Kopfabschnitt des Melkbechers erfolgt dadurch, dass der Kopfabschnitt zur Anlage an die Innenfläche der Wand der Kammer gebracht wird. Bei einer solchen Ausgestaltung der Reinigungseinheit wird zwar die Stirnfläche des Kopfabschnittes des Melkbechers gereinigt, nicht jedoch die Seitenfläche des Kopfabschnittes, was besonders nachteilig ist, wenn der Kopfabschnitt eine innen liegende Rille aufweist.

Hiervon ausgehend liegt der vorliegenden Erfindung die Zielsetzung zugrunde, die bekannte Reinigungseinheit zum Reinigen wenigstens eines Kopfabschnittes eines Melkbechers so weiter zu bilden, dass die Handhabung für die Durchführung der Reinigung vereinfacht wird.

Diese Aufgabe wird erfindungsgemäß durch eine Reinigungseinheit zum Reinigen wenigstens eines Kopfabschnittes eines Melkbechers mit den Merkmalen des Anspruchs 1 gelöst. Vorteilhafte Weiterbildungen und Ausgestaltungen der Reinigungseinheit sind Gegenstand der abhängigen Ansprüche.

Durch, die erfindungsgemäße Ausgestaltung der Reinigungseinheit wird die Handhabung wesentlich vereinfacht. Insbesondere ist der Kraftaufwand, der zum Einbringen des Kopfabschnittes des Melkbechers in die Kammer benötigt wird entsprechend geringer, als dies bei Reinigungseinheiten nach dem Stand der Technik der Fall ist. Auch die Entnahme des Melkbechers aus der Kammer wird vereinfacht. Andererseits ist durch die Ausgestaltung der Reinigungseinheit sichergestellt, dass zwischen dem Melkbecher und dem Dichtelement eine ausreichend hohe Dichtigkeit erreicht wird, um Vakuumverlust zu vermeiden.

Die erfindungsgemäße Reinigungseinheit zum Reinigen wenigstens eines Kopfabschnittes hat auch den Vorteil, dass zumindest das Entfernen des Melkbechers automatisiert werden kann. Nach der Durchführung einer Reinigung des Melkbechers kann dieser mittels einer entsprechenden Einrichtung aus der Kammer entfernt und in eine Bereitschaftsstellung gebracht werden.

In Abhängigkeit von dem zu verwendenden Melkzeug kann an einem Melkplatz eine entsprechende Anzahl von Reinigungseinheiten bereitgestellt werden. Handelt es sich bspw. um einen Melkplatz zum Melken von Kühen, so werden vier Reinigungseinheiten bereitgestellt. Die vier Reinigungseinheiten können eine gemeinsame Baueinheit bilden, so dass die Melkbecher des Melkzeugs gleichzeitig gereinigt werden können.

Die Elastizität des der Öffnung benachbarten Wandabschnittes und des Dichtelementes wird dadurch erreicht, dass der Wandabschnitt im Querschnitt im Wesentlichen wellenförmig ausgebildet ist. Hierdurch wird eine Dehnbarkeit des Wandabschnittes erzielt. Diese Dehnung ermöglicht ein vereinfachtes Einbringen des Kopfabschnittes des Melkbechers in die Kammer. Zieht sich der Wandabschnitt zusammen, kommt das Dichtelement zur Anlage an den Kopfabschnitt des Melkbechers.

Zu einer weiteren Verbesserung des Einsetzens bzw. des Herausziehens des Melkbechers aus der Kammer wird nach einer noch weiteren vorteilhaften Ausgestaltung der Reinigungseinheit vorgeschlagen, dass mehrere, vorzugsweise äquividistant zueinander angeordnete Wandabschnitte vorgesehen sind.

Zur Vereinfachung der Herstellung der Reinigungseinheit wird gemäß einer noch weiteren vorteilhaften Ausgestaltung der Reinigungseinheit vorgeschlagen, dass sich der Wandabschnitt über den gesamten Umfang der Kammer erstreckt. Hierdurch wird auch ein gleichmäßiges Dehnen erreicht, wodurch sich der Öffnungsquerschnitt der Öffnung entsprechend vergrößert.

Die Reinigung wenigstens eines Kopfabschnittes des Melkbechers erfolgt derart, dass die Kammer über einen Zulauf mit einer Reinigungsflüssigkeit, vorzugsweise mit Wasser, gefüllt wird. Befindet sich der Kopfabschnitt im Melkbecher, so ist es vorteilhaft, dass dieser beabstandet zum Boden der Kammer angeordnet ist, um eine vereinfachte Reinigung des Kopfabschnittes, insbesondere der Stirnfläche des Kopfabschnittes zu ermöglichen. Zu diesem Zweck weist die Kammer einen Boden auf, der mit Abstandshaltern versehen ist. Durch die Abstandshalter kann auch die Strömung des Reinigungsmittels in der Kammer positiv beeinflusst werden. Bevorzugt ist eine Ausgestaltung der Abstandshalter, bei der diese im Wesentlichen stegförmig ausgebildet sind. Vorzugsweise erstrecken sich die Abstandshalter von der Längsachse der Kammer radial auswärts. Hierdurch wird auch die Strömung des Reinigungsmittels in den Melkbecher in einer vorteilhaften Weise beeinflusst.

Gemäß einer noch weiteren vorteilhaften Ausgestaltung der Reinigungseinheit wird vorgeschlagen, dass die Wand Rippen aufweist, welche sich wenigstens teilweise in axialer Richtung der Kammer erstrecken.

Durch die Rippen wird eine Beabstandung des Kopfabschnittes des Melkbechers zur Wand erreicht, so dass Flüssigkeit entsprechend strömen kann und eine Reinigung der Außenseite des Kopfabschnittes erreicht wird.

Die Rippen haben auch den Vorteil, dass die Wand eine höhere mechanische Stabilität erreicht, ohne dass die elastische Dehnbarkeit in Umfangsrichtung wesentlich beeinträchtigt wird. Durch die Rippen bzw. durch die Rippen verstärkte Stabilität der Wand wird erreicht, dass wenn in der Kammer Unterdruck herrscht, die Wand sich nicht oder nur in einem sehr geringen Maße in Richtung des Kopfabschnittes des Melkbechers verformt und nicht zur Anlage an die Außenseite des Kopfabschnittes des Melkbechers gelangt.

Bevorzugt ist dabei eine Ausgestaltung, bei der die Rippen an der der Kammer zugewandten Seite der Wand vorgesehen sind. Es können auch einige Rippen an der Außenseite der Wand angebracht sein, die die Stabilität der Wand noch weiter erhöhen können.

Wenn die Rippen und die Abstandshalter in einer Ebene liegen, so können diese innerhalb der Kammer Strömungskanäle bilden.

Nach einer noch weiteren vorteilhaften Ausgestaltung der erfindungsgemäßen Reinigungseinheit wird vorgeschlagen, dass in axialer Richtung betrachtet die Wand wenigstens zwei Bereiche aufweist. Der der Öffnung benachbarte Bereich weist eine geringere Wanddicke auf als der wenigstens eine weitere Bereich. Hierdurch wird die Elastizität des Bereichs verändert, so dass die zum Einsetzen bzw. zum Herausziehen des Melkbechers notwendige Kraft entsprechend verringert werden kann, ohne dass die Dichtigkeit der Reinigungseinheit in Verbindung mit einem Melkbecher beeinflusst wird.

Vorzugsweise sind die axialen Erstreckungen der Bereiche.

Zur Erhöhung der Stabilität der Reinigungseinheit, insbesondere um zu vermeiden, dass beim Anliegen eines Vakuums die Kammer deformiert wird, wird vorgeschlagen, dass im Übergangsbereich zwischen zwei benachbarten Bereichen wenigstens eine sich wenigstens teilweise in Umfangsrichtung erstreckende Verstärkung vorgesehen ist.

Die erfindungsgemäße Reinigungseinheit ist vorzugsweise aus einem Werkstoff, insbesondere aus Gummi hergestellt. Vorzugsweise ist die Kammer der Reinigungseinheit einstückig ausgebildet.

Nach einer vorteilhaften Weiterbildung der Reinigungseinheit wird vorgeschlagen, dass die Kammer zwei Bereiche aufweist, wobei die Bereiche aus unterschiedlichen Materialien gebildet sind. So kann der Bereich, der wenigstens teilweise in Umfangsrichtung betrachtet elastisch ausgebildet ist, aus einem elastischen Material hergestellt sein, während der andere Bereich aus einem Material größerer Härte hergestellt ist. Hierbei handelt es sich vorzugsweise um eine Material mit geringeren elastischen oder nicht elastischen Eigenschaften. Die Kammer ist vorzugsweise bei einer solchen Ausgestaltung nach dem Zweikomponentenspritzverfahren hergestellt.

Gemäß einer noch weiteren vorteilhaften Ausgestaltung der erfindungsgemäßen Reinigungseinheit wird vorgeschlagen, dass wenigstens der der Öffnung benachbarte Bereich eine Shorehärte zwischen 50 und 70, vorzugsweise von 60, aufweist.

Nach einer noch weiteren vorteilhaften Ausgestaltung der erfindungsgemäßen Reinigungseinheit wird vorgeschlagen, dass im Wesentlichen konzentrisch zur Längsachse der Kammer ein vorzugsweise aus der Kammer herausragendes im Wesentlichen rotationssymmetrisches Element vorgesehen ist. Das Element ist so bemessen, dass es in das Zitzengummi hineinragt. Durch das Element wird während der Reinigung der Melkbecher in einer vorgegebenen Stellung gehalten.

Nach einer vorteilhaften Ausgestaltung der Reinigungseinheit wird vorgeschlagen, dass das Element wenigstens einen Auslass aufweist, der mit dem Zulauf verbunden ist.

Besonders bevorzugt ist eine Ausgestaltung der Reinigungseinheit, bei der das Element wenigstens einen ersten und wenigstens einen zweiten Auslass aufweist, die in axialer Richtung betrachtet so beabstandet zueinander angeordnet sind, dass wenn ein Kopfabschnitt eines Melkbechers in der Kammer angeordnet ist, das Element in den Melkbecher hineinragt, wobei der wenigstens eine Auslass unterhalb der Stirnfläche des Melkbechers und der wenigstens eine zweite Auslass in dem Melkbecher sind.

Durch diese Ausgestaltung der Reinigungseinheit wird erreicht, dass ein Teil des Reinigungsmittels durch den ersten Auslass in die Kammer strömt. Durch den zweiten Auslass gelangt eine Reinigungsflüssigkeit in den Melkbecher, so dass saubere Reinigungsflüssigkeit in den Melkbecher eingeleitet wird.

Der erste Auslass und der zweiten Auslass können über gesonderte Kanäle mit einer Reinigungsflüssigkeit versorgt werden, wobei eine Steuerung vorgesehen sein kann, die entsprechende Mittel, vorzugsweise Ventile, derart ansteuert, dass die Reinigungsflüssigkeit zeitlich versetzt in die Kammer bzw. in das Element geleitet werden kann.

Durch eine entsprechende Steuerung kann auch sichergestellt werden, dass der wesentliche Teil der Flüssigkeit durch den zweiten Auslass in den Melkbecher gelangen kann.

Während des Reinigungsvorgangs liegt im Melkbecher Vakuum an, so dass die Reinigungsflüssigkeit aus der Kammer abgesaugt wird. Die Zuführung der Reinigungsflüssigkeit erfolgt nicht kontinuierlich, sondern stoßweise unter Zwischenschaltung von Belüftung, so dass abwechselnd durch die Auslässe eine Reinigungsflüssigkeit und Luft hindurchgeleitet wird.

Zur Verbesserung der Strömung der Reinigungsflüssigkeit in den Melkbecher bzw. in das Zitzengummi wird vorgeschlagen, dass das Element wenigstens eine sich in Längsrichtung des Elementes erstreckende Rille aufweist. Entlang dieser Rille kann eine Flüssigkeit geführt werden.

Gemäß einer noch weiteren vorteilhaften Ausgestaltung der Reinigungseinheit wird vorgeschlagen, dass das Element einen im Wesentlichen kegelförmig ausgebildeten freien Endabschnitt aufweist. Hierdurch wird die Positionierung des Melkbechers vereinfacht. Andererseits wird durch die Ausgestaltung des freien Endabschnittes eine Verwirbelung der Reinigungsflüssigkeit im Zitzengummi erreicht, so dass eine Reinigung des Zitzengummis im Melkbecher verbessert wird.

Nach einer noch weiteren vorteilhaften Ausgestaltung der erfindungsgemäßen Reinigungseinheit wird vorgeschlagen, dass der freie Abschnitt eine der Anzahl der Rillen entsprechende Anzahl von Kanälen aufweist, die mit den Rillen strömungstechnisch kommunizieren, so dass ein Teil der Flüssigkeit auch durch den im Wesentlichen kegelförmig ausgebildeten freien Endabschnitt hindurchströmen kann.

Weitere Einzelheiten und Vorteile der erfindungsgemäßen Reinigungseinheit werden anhand des in der Zeichnung dargestellten Ausführungsbeispiels erläutert, ohne dass der Gegenstand der Erfindung auf dieses konkrete Ausführungsbeispiel beschränkt wird.

Es zeigen:
- Figur 1:: eine Reinigungseinheit in einer perspektivischen Ansicht,
- Figur 2:: die Reinigungseinheit nach Figur 1 im Schnitt in Verbindung mit einer Trageinheit,
- Figur 3:: ein Element in einer Vorderansicht,
- Figur 4:: vergrößert und im Schnitt einen Endbereich des Elementes nach Figur 3,
- Figur 5:: die Reinigungseinheit nach Figur 1 in einer Schnittansicht mit einem Zitzengummi,
- Figur 6:: ein erstes Ausführungsbeispiel der Anordnung mehrerer Reinigungseinheiten am Melkplatz,
- Figur 7:: ein zweites Ausführungsbeispiel der Anordnung mehrerer Melkeinheiten am Melkplatz und
- Figur 8:: ein drittes Ausführungsbeispiel der Anordnung mehrerer Reinigungseinheiten am Melkplatz.

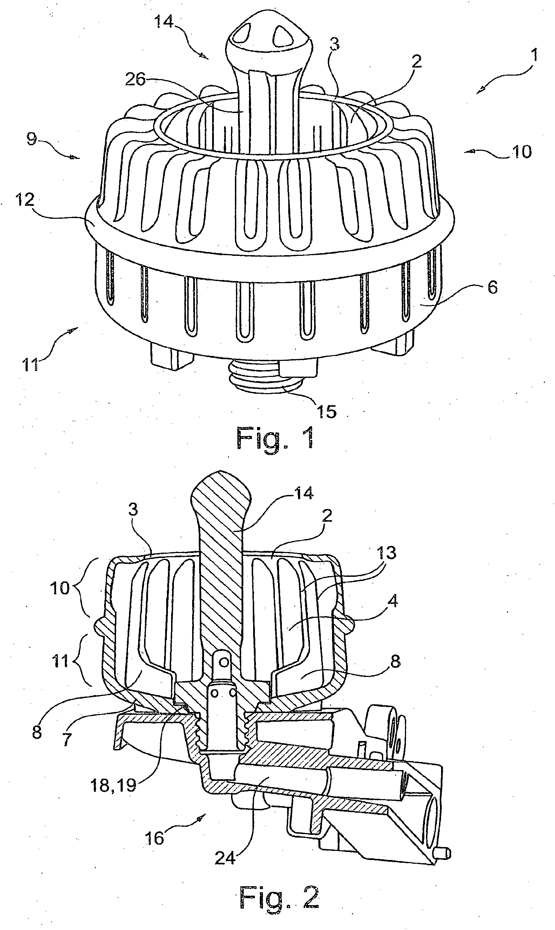

Figur 1 zeigt schematisch in einer perspektivischen Ansicht ein Ausführungsbeispiel einer erfindungsgemäßen Reinigungseinheit 1 zum Reinigen wenigstens eines Kopfabschnittes eines Melkbechers.

Die Reinigungseinheit 1 weist eine im Wesentlichen kreisförmige Kammer 4 auf, die durch eine Wand 6 begrenzt ist. Die Kammer hat eine Öffnung 2, die durch ein Dichtelement 3 begrenzt ist.

Die Reinigungseinheit 1 ist einstückig aus Gummi oder einem elastischen Material hergestellt.

Die Reinigungseinheit 1 weist einen Wandabschnitt 9 auf, der, wie aus der Darstellung nach Figur 1 ersichtlich ist, im Querschnitt im Wesentlichen wellenförmig ausgebildet ist. Der Wandabschnitt 9 erstreckt sich in Umfangsrichtung der Kammer betrachtet über den gesamten Umfang.

Mit dem Wandabschnitt 9 ist einstückig das Dichtelement 3 ausgebildet, welches eine radiale Erstreckung von ca. 2,5 mm aufweist. Das Dichtelement 3 ist, wie insbesondere aus der Figur 2 ersichtlich, schräg nach oben gerichtet.

Die Wand 6 der Kammer weist zwei Bereiche 10, 11 auf, die eine unterschiedliche Wanddicke aufweisen. Der dem Dichtelement 3 benachbarte Bereich 10 weist eine geringere Wanddicke auf als der weitere Bereich 11 der Wand 6. Die axiale Erstreckung der Bereiche 10, 11 ist vorzugsweise gleich. Aus den Figuren 1 und 2 ist ersichtlich, dass zwischen den Bereichen 10, 11 in Umfangsrichtung betrachtet eine Verstärkung 12 vorgesehen ist, die wulstartig ausgebildet ist.

Der Öffnung 2 gegenüberliegend ist ein Boden 7 vorgesehen. Am Boden 7 sind Abstandshalter 8 ausgebildet. Die Abstandshalter 8 sind im Wesentlichen stegförmig ausgeformt. Bevorzugt erstrecken sich die Abstandshalter 8 von der Innenseite der Wand 6 radial einwärts.

An der Innenseite der Wand 6 sind Rippen 13 ausgebildet, die sich wenigstens teilweise in axialer Richtung der Kammer 4 erstrecken.

Im Wesentlichen konzentrisch zur Längsachse der Kammer 4 ist ein rotationssymmetrisches Element 14 angeordnet. Das Element 14 ragt aus der Kammer 4 der Reinigungseinheit 1 heraus.

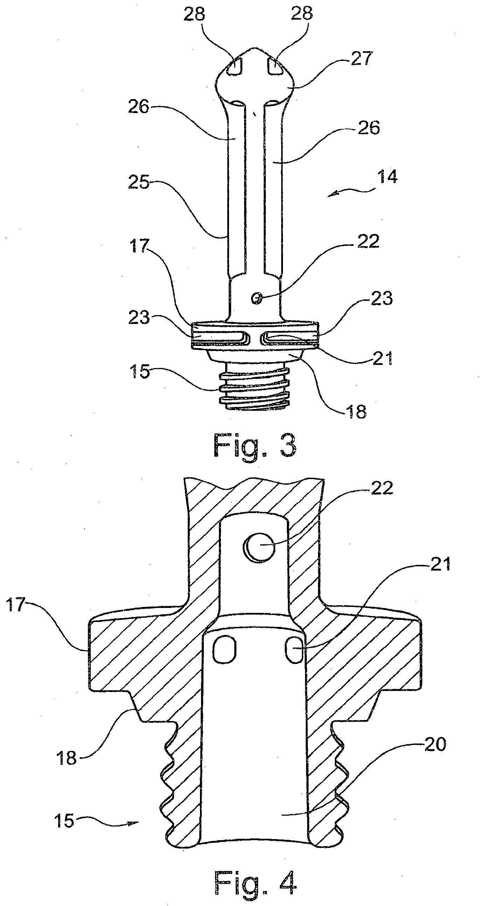

Das Element 14 ist in der Figur 3 dargestellt. Es weist einen Anschlussbereich 15 auf, der in dem dargestellten Ausführungsbeispiel in Form eines Gewindes ausgebildet ist. Der Anschlussbereich 15 ragt aus der Reinigungseinheit 1 heraus und dient zur Verbindung mit einer Trageinheit 16. Die Trageinheit 16 weist ein entsprechendes Innengewinde zur Aufnahme des Gewindes des Anschlussbereichs 15 auf. Oberhalb des Anschlussbereichs 15 ist ein Kragen 17 vorgesehen, der zur Anlage an den Boden 7 im montierten Zustand gelangt. Der Kragen 17 weist eine Schräge 18 auf, die mit einer entsprechend ausgebildeten Schräge 19 in einer Öffnung im Boden 7 zusammenwirkt. Durch die Schräge 18 und die entsprechende Gegenschräge 19 im Boden 7 wird eine Zentrierung der Reinigungseinheit 1 an der Trageinheit 16 erreicht.

Innerhalb des Elementes 14 ist ein Kanal 20 vorgesehen. Der Kanal 20 erstreckt sich teilweise in Längsrichtung des Elementes 14. Der Kanal 20 weist einen ersten Auslass 21 und einen zweiten Auslass 22 auf. Der erste und der zweite Auslass sind in axialer Richtung betrachtet beabstandet zueinander. Der erste Auslass 21 wird in dem dargestellten Ausführungsbeispiel durch vier Austrittsöffnungen gebildet, die in entsprechende Taschen 23 des Kragens 17 münden.

Der Kanal 20 des Elementes 14 ist mit einer Zuleitung 24, welche in der Trageinheit 16 ausgebildet ist, verbunden. Strömt eine Reinigungsflüssigkeit durch die Zuleitung 24 in den Kanal 20 des Elementes 14, so verlässt die Flüssigkeit das Element durch den ersten Auslass 21 und den zweiten Auslass 22 und gelangt sowohl in das Innere als auch das Äußere des Zitzengummis, der sich im Melkbecher befindet. Weitere Details werden weiter unten erläutert.

Ein Melkbecher umfasst eine Melkbecherhülse und ein in dieser angeordnetes Zitzengummi. Der Begriff Zitzengummi ist im Wesentlichen in funktionaler Hinsicht auszulegen. Hierdurch wird keine- Beschränkung auf ein Zitzengummi aus dem Werkstoff Gummi beschränkt. Das Zitzengummi kann auch aus Silikon oder anderen Materialien hergestellt sein. Ein Kopfbereich des Zitzengummis umgreift die Melkbecherhülse, so dass dieser Kopfbereich außerhalb der Melkbecherhülse liegt. Soweit im Weiteren von der Reinigung des Melkbechers gesprochen wird, so ist auch die Reinigung des Zitzengummis darunter zu verstehen.

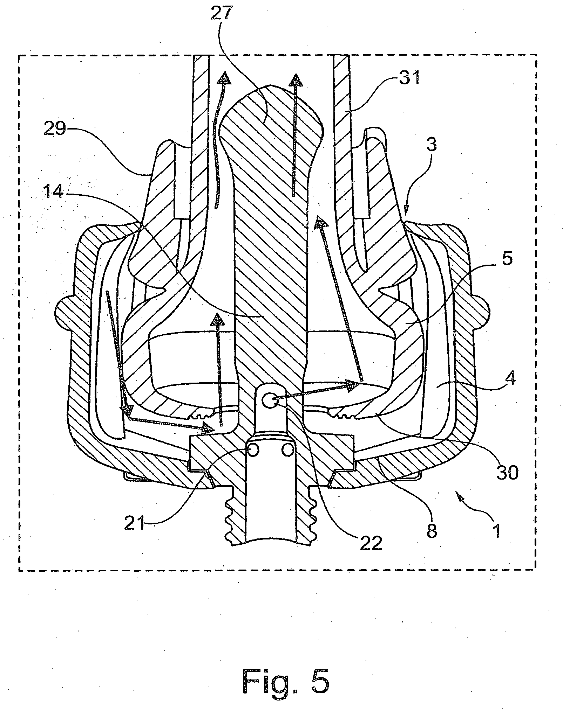

Die Strömung der Reinigungsflüssigkeit aus dem Element 14 ist schematisch in der Figur 5 dargestellt.

Das Element 14 weist einen Schaft 25 auf. In Längsrichtung des Schaftes sind Rillen 26 vorgesehen. Der freie Endbereich 27 des Elementes 14 ist im Wesentlichen kegelförmig ausgebildet. Der freie Endabschnitt 27 des Schaftes 25 weist Kanäle 28 auf. Die Kanäle 28 erstrecken sich in Längsrichtung des Schaftes 26 und kommunizieren mit den Rillen 26.

Zur Durchführung eines Reinigungsvorgangs eines Kopfabschnittes 5 eines Zitzengummis wird der Kopfabschnitt 5 des Zitzengummis in der Reinigungseinheit 1 positioniert, wie dies aus der Figur 5 ersichtlich ist. Dadurch, dass das Element 14 aus der Kammer 4 der Reinigungseinheit 1 herausragt und einen im Wesentlichen kegelförmig ausgebildeten Endabschnitt 27 aufweist, wird beim Einsetzen des Kopfabschnittes 5 in die Kammer der Melkbecher positioniert. Während des Reinigungsvorgangs unterstützt das Element 14 die Position des Melkbechers.

Beim Einsetzen des Kopfabschnittes 5 des Melkbechers wird der Wandbereich der Reinigungseinheit in Umfangsrichtung gedehnt, was auch für das Dichtungselement 3 der Fall ist, so dass das Einsetzen des Kopfabschnittes 5 erleichtert wird. Das Dichtungselement 3 gelangt zur Anlage an einen Kragen 29 des Zitzengummis. Die Stirnfläche 30 des Kopfabschnittes 5 des Zitzengummis liegt auf den Abstandshaltern 8 auf. Zwischen der Innenseite der Wand 6 und der Außenfläche des Kopfabschnitts 5 ist ein ringförmiger Spalt vorhanden, zwischen den das Reinigungsmittel gelangen kann.

Zur Reinigung des Kopfabschnittes 5 wird über die Zuleitung 24 ein Reinigungsmittel, insbesondere Wasser, in den Kanal 20 geleitet. Das Reinigungsmittel verlässt den Kanal 20 durch den ersten Auslass 21 und den zweiten Auslass 22. Das den ersten Auslass 21 verlassende Reinigungsmittel füllt die Kammer 4 mit dem Reinigungsmittel. Das Reinigungsmittelniveau steigt in der Kammer 4, bis diese vorzugsweise nahezu vollständig gefüllt ist. Ein Teil des durch den Kanal 20 zugeführten Reinigungsmittels verlässt den Kanal 20 durch den Auslass 22 und gelangt direkt in das Zitzengummi 31.

Das in der Kammer 4 sich befindende Reinigungsmittel wird in das Zitzengummi 31 aufgrund des während des Reinigungsprozesses im Zitzengummi herrschenden Vakuums eingesaugt. Die Strömungswege sind schematisch durch Pfeile dargestellt.

Um einen schnellen Abzug des Reinigungsmittels aus dem Zitzengummi 31 zu erreichen, sind die Rillen 26 und die Kanäle 28 vorgesehen. Ein Teil des Reinigungsmittels umströmt den im Wesentlichen kegelförmigen Endabschnitt 27 des Elementes 14, während ein Teil der Flüssigkeit entlang der Rillen 26 durch den Kanal 24 in den Schaftbereich des Zitzengummis 31 strömt.

Dadurch, dass das Reinigungsmittel in die Kammer einleitet und aus dieser abgesaugt wird, wird eine Reinigung der Außenseite des Kopfabschnittes 5 des Zitzengummis erreicht.

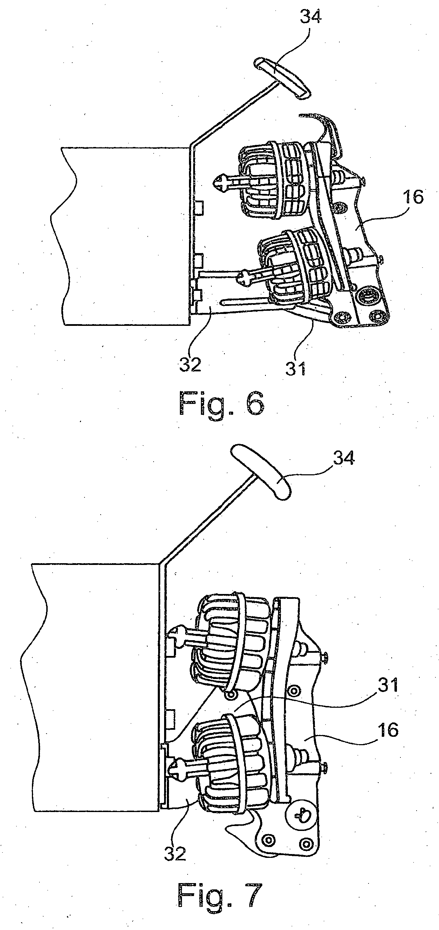

In den Figuren 6 bis 8 sind unterschiedliche Anordnungen von Reinigungseinheiten 1 am Melkstand dargestellt.

Die Figuren 6 bis 8 zeigen vier Reinigungseinheiten, die jeweils auf einer Trageinheit 16 angeordnet sind. Die vier Reinigungseinheiten dienen zum Reinigen von Melkzeugen, die zum Melken von Kühen gedacht sind.

Die Figur 6 zeigt eine Anordnung, bei der die Trageinheit 16 gelenkig über einen Arm 31 mit einem Tragarm 32 verbunden ist. Durch Verschwenken der Trageinheit 16 kann die Trageinheit 16 in die Arbeitsstellung gebracht werden, in der die Melkbecher, welche nicht dargestellt sind, in die Reinigungseinheiten eingebracht werden.

Der Tragarm 32 ist an einer Seitenwand eines nicht weiter dargestellten Melkstandes befestigt.

Zur Halterung eines Milchsammelstücks ist eine Halter 34 vorgesehen.

Figur 7 zeigt eine kompaktere Ausgestaltung der Anordnung von Reinigungseinheiten, die an einer Trageinheit 16 angeordnet sind. Die Trageinheit 16 ist über einen Arm 31 mit einem Tragarm 32 verbunden, der mit einer Wand eines Melkstandes verbunden ist. Der Tragarm und der Haltearm sind gelenkig miteinander verbunden. Dies gilt auch für den Haltearm und die Trageinheit 16. Durch eine entsprechende Bewegung können der Tragarm, der Haltearm und die Trageinheit in eine im Wesentlichen horizontale Lage gebracht werden.

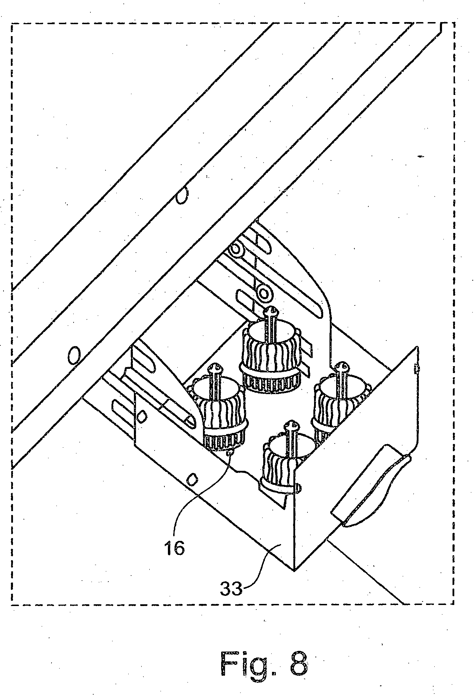

Figur 8 zeigt eine Anordnung von vier Reinigungseinheiten, die an einer Trageinheit 16 festgelegt sind. Die Trageinheit 16 ist in einer Schublade 33 angeordnet, welche im Bereich des Melkstandes angeordnet ist.

Die Reinigungseinheit kann auch unmittelbar an einer Reinigungsleitung angeordnet sein. Die Anzahl der Reinigungseinheiten ist abhängig von der Anzahl der zu reinigenden Melkzeuge. Für einen Ziegenmelkstand können bspw. zwei Reinigungseinheiten vorgesehen sein.

### Bezugszeichenliste

- 1: Reinigungselement
- 2: Öffnung
- 3: Dichtungselement
- 4: Kammer
- 5: Kopfabschnitt
- 6: Wand
- 7: Boden
- 8: Abstandshalter
- 9: Wandabschnitt
- 10 / 11: Bereich
- 12: Verstärkung
- 13: Rippe
- 14: Element
- 15: Anschlussbereich
- 16: Trageinheit
- 17: Kragen
- 18 / 19: Schräge
- 20: Kanal
- 21: erster Auslass
- 22: zweiter Auslass
- 23: Tasche
- 24: Zuleitung
- 25: Schaft
- 26: Rille
- 27: Endabschnitt
- 28: Kanal
- 29: Kragen
- 30: Stirnfläche
- 31: Arm
- 32: Tragarm
- 33: Schublade

## Patentansprüche

1. Reinigungseinheit zum Reinigen wenigstens eines Kopfabschnittes (5) eines Melkbechers umfassend eine im Querschnitt im Wesentlichen kreisförmige Kammer (4), die durch eine Wand (6) begrenzt ist, mit einer Öffnung (2), welche durch ein Dichtelement (3) begrenzt ist, wobei die Kammer (4) wenigstens einen Zulauf aufweist, **dadurch gekennzeichnet, dass** wenigstens ein der Öffnung (2) benachbarter Wandabschnitt (9) der Wand (6) und ein Abschnitt des Dichtelementes (3) im Wesentlichen in Umfangsrichtung der Kammer (4) elastisch ausgebildet ist, wobei der Wandabschnitt (9) im Querschnitt im Wesentlichen wellenförmig ausgebildet ist.

2. Reinigungseinheit nach Anspruch 1, **dadurch gekennzeichnet, dass** mehrere, vorzugsweise äquidistant zueinander angeordnete Wandabschnitte (9) vorgesehen sind.

3. Reinigungseinheit nach Anspruch 1 oder 2, **dadurch gekennzeichnet, dass** der Wandabschnitt (9) sich über den gesamten Umfang der Kammer (4) erstreckt.

4. Reinigungseinheit nach wenigstens einem der vorhergehenden Ansprüche 1 bis 3, **dadurch gekennzeichnet, dass** die Kammer (4) einen Boden (7) mit Abstandshaltern (8) aufweist.

5. Reinigungseinheit nach Anspruch 4, **dadurch gekennzeichnet, dass** die Abstandshalter (8) im Wesentlichen stegförmig ausgebildet sind.

6. Reinigungseinheit nach wenigstens einem der vorhergehenden Ansprüche **dadurch gekennzeichnet, dass** die Wand (6) Rippen (13) aufweist, welche sich wenigstens teilweise in axialer Richtung der Kammer (4) erstrecken.

7. Reinigungseinheit nach Anspruch 6, **dadurch gekennzeichnet, dass** wenigstens einige Rippen (13) in der der Kammer (4) zugewandten Seite der Wand (6) vorgesehen sind.

8. Reinigungseinheit nach Anspruch 4 und 7, **dadurch gekennzeichnet, dass** in wenigstens einer axialen Ebene ein Abstandshalter (8) und eine Rippe (13) liegen.

9. Reinigungseinheit nach wenigstens einem der vorhergehenden Ansprüche 1 bis 8, **dadurch gekennzeichnet, dass** in axialer Richtung betrachtet die Wand (6) wenigstens zwei Bereiche (10, 11) aufweist, wobei der der Öffnung (2) benachbarter Bereich (10) eine geringere Wanddicke aufweist als der wenigstens eine weitere Bereich (11).

10. Reinigungseinheit nach Anspruch 9, **dadurch gekennzeichnet, dass** das Verhältnis der axialen Erstreckungen der Bereiche (10, 11) vorzugsweise bei Eins liegt.

11. Reinigungseinheit nach Anspruch 9 oder 10, **dadurch gekennzeichnet, dass** im Übergangsbereich zwischen zwei benachbarten Bereichen (10, 11) wenigstens eine sich wenigstens teilweise in Umfangsrichtung erstreckende Verstärkung (12) vorgesehen ist.

12. Reinigungseinheit nach Anspruch 9, 10 oder 11, **dadurch gekennzeichnet, dass** zwei Bereiche (10, 11) vorgesehen sind, wobei die Bereiche aus unterschiedlichen Materialien gebildet sind.

13. Reinigungseinheit nach Anspruch 12, **dadurch gekennzeichnet, dass** die Bereiche (10,11) nach dem Zwei-Komponenten-Spritzverfahren hergestellt sind.

14. Reinigungseinheit nach wenigstens einem der Ansprüche 9 bis 13, **dadurch gekennzeichnet, dass** wenigstens der der Öffnung (2) benachbarter Bereich eine Shore Härte zwischen 50 und 70, vorzugsweise von 60 aufweist.

15. Reinigungseinheit nach wenigstens einem der vorhergehenden Ansprüche 1 bis 14, **dadurch gekennzeichnet, dass** im Wesentlichen konzentrisch zur Längsachse der Kammer (4) ein vorzugsweise aus der Kammer herausragendes im Wesentlichen rotationssymmetrisches Element (14) vorgesehen ist.

16. Reinigungseinheit nach Anspruch 15, **dadurch gekennzeichnet, dass** das Element (14) wenigstens einen Auslass (21, 22) aufweist, der mit dem Zulauf verbunden ist.

17. Reinigungseinheit nach Anspruch 16, **dadurch gekennzeichnet, dass** das Element (14) wenigstens einen ersten (21) und wenigstens einen zweiten (22) Auslass aufweist, die in axialer Richtung betrachtet so beabstandet zueinander angeordnet sind, dass wenn ein Kopfabschnitt (5) eines Zitzengummis in der Kammer (4) angeordnet ist, das Element (14) in den Zitzengummi hineinragt, wobei der wenigstens eine erste Auslass (21) unterhalb der Stirnfläche (30) des Zitzengummis und der wenigstens eine zweite Auslass (22) in dem Zitzengummi liegt.

18. Reinigungseinheit nach Anspruch 15, 16 oder 17, **dadurch gekennzeichnet, dass** das Element (14) wenigstens eine sich in Längsrichtung des Elementes (14) erstreckende Rille (26) aufweist.

19. Reinigungseinheit nach wenigstens einem der vorhergehenden Ansprüche 15 bis 18, **dadurch gekennzeichnet, dass** das Element (14) einen im Wesentlichen kegelförmig ausgebildeten freien Endabschnitt (27) aufweist.

20. Reinigungseinheit nach Anspruch 18 und 19, **dadurch gekennzeichnet, dass** der freie Endabschnitt (27) eine der Anzahl der Rillen (26) entsprechende Anzahl von Kanälen (28) aufweist, die mit den Rillen (26) strömungstechnisch kommunizieren.

## Claims

1. Cleaning unit for cleaning at least one head section (5) of a milking cup, comprising a chamber (4) which is substantially circular in cross section and is delimited by a wall (6), with an opening (2) which is delimited by a sealing element (3), wherein the chamber (4) has at least one inlet, **characterized in that** at least one section (9) of the wall (6) adjacent to the opening (2) and a section of the sealing element (3) is designed to be elastic substantially in the circumferential direction of the chamber (4), wherein the wall section (9) is substantially corrugated in cross section.

2. Cleaning unit according to Claim 1, **characterized in that** a plurality of wall sections (9) which are preferably arranged equidistant to one another are provided.

3. Cleaning unit according to Claim 1 or 2, **characterized in that** the wall section (9) extends over the entire circumference of the chamber (4).

4. Cleaning unit according to at least one of the preceding Claims 1 to 3, **characterized in that** the chamber (4) has a bottom (7) with spacers (8).

5. Cleaning unit according to Claim 4, **characterized in that** the spacers (8) are substantially web-shaped.

6. Cleaning unit according to at least one of the preceding claims, **characterized in that** the wall (6) has ribs (13) which extends at least partially in the axial direction of the chamber (4).

7. Cleaning unit according to Claim 6, **characterized in that** at least some ribs (13) are provided in the side of the wall (6) facing the chamber (4).

8. Cleaning unit according to Claims 4 and 7, **characterized in that** a spacer (8) and a rib (13) lie in at least one axial plane.

9. Cleaning unit according to at least one of the preceding Claims 1 to 8, **characterized in that**, as viewed in the axial direction, the wall (6) has at least two regions (10, 11), wherein the region (10) adjacent to the opening (2) has a smaller wall thickness than the at least one further region (11).

10. Cleaning unit according to Claim 9, **characterized in that** the ratio of the axial extensions of the regions (10, 11) is preferably one.

11. Cleaning unit according to Claim 9 or 10, **characterized in that** at least one reinforcement (12) which extends at least partially in the circumferential direction is provided in the transition region between two adjacent regions (10, 11).

12. Cleaning unit according to Claim 9, 10 or 11, **characterized in that** two regions (10, 11) are provided, wherein the regions are formed from different materials.

13. Cleaning unit according to Claim 12, **characterized in that** the regions (10, 11) are produced by the two-component injection-molding process.

14. Cleaning unit according to at least one of claims 9 to 13, **characterized in that** at least the region adjacent to the opening (2) has a Shore hardness between 50 and 70, preferably of 60.

15. Cleaning unit according to at least one of the preceding Claims 1 to 14, **characterized in that** a substantially rotationally symmetrical element (14) which preferably projects from the chamber is provided substantially concentrically to the longitudinal axis of the chamber (4).

16. Cleaning unit according to Claim 15, **characterized in that** the element (14) has at least one outlet (21, 22) which is connected to the inlet.

17. Cleaning unit according to Claim 16, **characterized in that** the element (14) has at least one first (21) and at least one second (22) outlet which, as viewed in the axial direction, are arranged at a distance from one another such that, if a head section (5) of a teat rubber is arranged in the chamber (4), the element (14) projects into the teat rubber, wherein the at least one first outlet (21) is situated below the end face (30) of the teat rubber and the at least one second outlet (22) is situated in the teat rubber.

18. Cleaning unit according to Claim 15, 16 or 17, **characterized in that** the element (14) has at least one groove (26) which extends in the longitudinal direction of the element (14).

19. Cleaning unit according to at least one of the preceding Claims 15 to 18, **characterized in that** the element (14) has a substantially conical free end section (27).

20. Cleaning unit according to Claims 18 and 19, **characterized in that** the free end section (27) has a number of channels (28) which corresponds to the number of grooves (26), which channels communicate in terms of flow with the grooves (26).

## Revendications

1. Unité de nettoyage pour nettoyer au moins une section de tête (5) d'un gobelet trayeur, comprenant une chambre (4) de section transversale essentiellement circulaire, laquelle est limitée par une paroi (6), avec une ouverture (2) qui est limitée par un élément d'étanchéité (3), la chambre (4) présentant au moins une alimentation, **caractérisée en ce qu'**au moins une section de paroi (9) de la paroi (6) adjacente à l'ouverture (2) et une section de l'élément d'étanchéité (3) sont réalisées élastiquement essentiellement dans la direction périphérique de la chambre (4), la section de paroi (9) étant réalisée en section transversale de manière essentiellement ondulée.

2. Unité de nettoyage selon la revendication 1, **caractérisée en ce que** plusieurs sections de paroi (9) disposées de préférence de manière équidistante les unes par rapport aux autres sont prévues.

3. Unité de nettoyage selon la revendication 1 ou 2, **caractérisée en ce que** la section de paroi (9) s'étend sur toute la périphérie de la chambre (4).

4. Unité de nettoyage selon au moins l'une quelconque des revendications 1 à 3, **caractérisée en ce que** la chambre (4) présente un fond (7) avec des éléments d'espacement (8).

5. Unité de nettoyage selon la revendication 4, **caractérisée en ce que** les éléments d'espacement (8) sont réalisés essentiellement en forme de nervures.

6. Unité de nettoyage selon au moins l'une quelconque des revendications précédentes, **caractérisée en ce que** la paroi (6) présente des ailettes (13) qui s'étendent au moins en partie dans la direction axiale de la chambre (4).

7. Unité de nettoyage selon la revendication 6, **caractérisée en ce qu'**au moins certaines ailettes (13) sont prévues dans le côté de la paroi (6) tourné vers la chambre (4).

8. Unité de nettoyage selon les revendications 4 et 7, **caractérisée en ce qu'**un élément d'espacement (8) et une ailette (13) sont situés dans au moins un plan axial.

9. Unité de nettoyage selon au moins l'une quelconque des revendications précédentes 1 à 8, **caractérisée en ce que**, vu dans la direction axiale, la paroi (6) présente au moins deux régions (10, 11), la région (10) adjacente à l'ouverture (2) présentant une plus faible épaisseur de paroi que l'au moins une autre région (11).

10. Unité de nettoyage selon la revendication 9, **caractérisée en ce que** le rapport des étendues axiales des régions (10, 11) est de préférence d'environ 1.

11. Unité de nettoyage selon la revendication 9 ou 10, **caractérisée en ce qu'**au moins un renforcement (12) s'étendant au moins en partie dans la direction périphérique est prévu dans la région de transition entre deux régions adjacentes (10, 11).

12. Unité de nettoyage selon la revendication 9, 10 ou 11, **caractérisée en ce que** deux régions (10, 11) sont prévues, les régions étant formées de matériaux différents.

13. Unité de nettoyage selon la revendication 12, **caractérisée en ce que** les régions (10, 11) sont fabriquées selon un procédé de pulvérisation à deux composants.

14. Unité de nettoyage selon au moins l'une quelconque des revendications 9 à 13, **caractérisée en ce qu'**au moins la région adjacente à l'ouverture (2) présente une dureté Shore comprise entre 50 et 70, de préférence de 60.

15. Unité de nettoyage selon au moins l'une quelconque des revendications précédentes 1 à 14, **caractérisée en ce qu'**un élément (14) essentiellement à symétrie de révolution faisant de préférence saillie hors de la chambre est prévu de manière essentiellement concentrique à l'axe longitudinal de la chambre (4).

16. Unité de nettoyage selon la revendication 15, **caractérisée en ce que** l'élément (14) présente au moins une sortie (21, 22) qui est connectée à l'alimentation.

17. Unité de nettoyage selon la revendication 16, **caractérisée en ce que** l'élément (14) présente au moins une première sortie (21) et au moins une deuxième sortie (22), lesquelles, vues dans la direction axiale, sont disposées de manière espacée l'une de l'autre de telle sorte que lorsqu'une section de tête (5) d'un manchon trayeur est disposée dans la chambre (4), l'élément (14) pénètre dans le manchon trayeur, l'au moins une première sortie (21) étant située en dessous de la surface frontale (30) du manchon trayeur et l'au moins une deuxième sortie (22) étant située à l'intérieur du manchon trayeur.

18. Unité de nettoyage selon la revendication 15, 16 ou 17, **caractérisée en ce que** l'élément (14) présente au moins une rainure (26) s'étendant dans la direction longitudinale de l'élément (14).

19. Unité de nettoyage selon au moins l'une quelconque des revendications précédentes 15 à 18, **caractérisée en ce que** l'élément (14) présente une section d'extrémité libre (27) réalisée essentiellement sous forme conique.

20. Unité de nettoyage selon les revendications 18 et 19, **caractérisée en ce que** la section d'extrémité libre (27) présente un nombre de canaux (28) correspondant au nombre des rainures (26), lesquels communiquent fluidiquement avec les rainures (26).
